# EUROPEAN PATENT SPECIFICATION

(11) **EP 4 621 239 B1**
(45) Date of publication and mention of the grant of the patent: **30.09.2026**
(21) Application number: 25160094.6
(22) Date of filing: 25.02.2025
(51) Int. Cl.: F04C 18/16, F04C 29/04, F04C 29/00, H02K 5/20, H02K 7/14, F04C 23/00

(54) **MOTOR COOLING IN SCREW COMPRESSORS**
MOTORKÜHLUNG IN SCHRAUBENVERDICHTERN
REFROIDISSEMENT DE MOTEUR DANS DES COMPRESSEURS À VIS

(30) Priority: 18.03.2024 US 202463566700 P
(43) Date of publication of application: 24.09.2025
(73) Proprietor: Carrier Corporation, Palm Beach Gardens, FL 33418 (US)
(72) Inventor: QIU, Yifan, East Syracuse, 13057 (US); ROCKWELL, David, East Syracuse, 13057 (US); KRAWEC, Scott, East Syracuse, 13057 (US)
(74) Representative: Dehns

(56) References cited:
- CN-A- 106 762 634
- CN-U- 203 430 779
- US-A- 3 479 541
- US-A1- 2007 241 627
- US-A1- 2022 271 610
- US-B1- 6 443 711

## Description

### BACKGROUND

This invention relates to the field of screw compressors, and more particularly, a cooling system for motors associated with screw compressors.

US 2022/271610 A1 discloses a compressor comprising an oil supply line for injecting oil into a motor, the oil supply line being connected to nozzles directed at heads or axial ends of the motor stator windings. A similar compressor is also known from US 3 479 541 A.

US 6443711 B1 discloses a screw compressor comprising rotor bearings exposed to and cooled by oil in the motor/suction chamber.

CN 106762634 A discloses a screw compressor capable of independently cooling a motor.

US 2007/241627 A1 discloses a screw compressor comprising a permanent magent motor mounted directly thereto.

CN 203430779 U discloses a screw compressor for a refrigeration system that is semi-closed to reduce ammonia leakage.

### SUMMARY

A first aspect of the present invention provides a motor for a compressor. The motor comprises a rotor configured over a shaft, a stator arranged around the rotor within a cover associated with the motor, and at least one fluid injection device, wherein the at least one injection device has a predefined shape and comprises an inlet port, and one or more outlet ports configured at predefined positions on the corresponding injection device, the one or more outlet ports being fluidically connected to the inlet port via a plurality of fluidic passages extending within the corresponding injection device, wherein the inlet of each of the at least one injection device is fluidically connected to a fluid injection passage extending through the cover.

Optionally, the compressor is a screw compressor, wherein the at least one fluid injection device is configured at one or both ends of the shaft.

Optionally, the compressor is a semi-hermetic screw compressor associated with a vapor compression system, wherein the shaft is rotatably configured within a housing associated with the compressor, such that a first section of the shaft extends out of the housing and remains enclosed by the cover and a second section of the shaft remains enclosed within the housing, wherein the cover is attached to the housing and the inlet of each of the at least one injection device is fluidically connected to the fluid injection passage extending through the cover and/or the housing of the motor.

Optionally, the motor is configured to enable a refrigerant associated with the compressor to flow into the at least one injection device through the inlet port via fluid injection passage provided in the cover and/or the housing of the motor, wherein the at least one injection device further enables the refrigerant to flow or spray towards the stator and/or the rotor, at the one or both ends of the shaft or the first section, through the outlet ports via the corresponding fluidic passages.

A first injection device among the at least one injection device is a ring-shaped member comprising the inlet port and the one or more outlet ports, wherein the first injection device is configured with the cover at a first end of the shaft such that the first injection device remains fluidically connected to a first fluid injection passage provided in the cover.

Optionally, a second injection device among the at least one injection device is a ring-shaped member comprising the inlet port and the one or more outlet ports, wherein the second injection device is configured with the housing at a second end of the first section of the shaft or a second end of the shaft such that the second injection device remains fluidically connected to a second fluid injection passage provided in the housing with the shaft extends coaxially through the second injection device.

The inlet port is configured axially on a planar side of the ring-shaped member, and the one or more outlet ports are configured radially at the predefined positions along an outer curved surface of the corresponding ring-shaped member.

Optionally, the at least one fluid injection devices comprises one or more mounting holes that are configured to facilitate attachment of the corresponding fluid injection devices, at the corresponding fluid injection passage, to the cover and/or the housing using one or more fasteners, such that the inlet of the attached injection device gets fluidically connected to the corresponding fluid injection passage.

Optionally, the size of the one or more outlet ports is less than the size of the inlet port.

Optionally, the one or more outlet ports are configured at the predefined positions on the at least one injection device such that upon configuring the corresponding injection device with respect to the shaft, the one or more outlet ports remain above a plane passing through a center of the shaft.

### BRIEF DESCRIPTION OF THE DRAWINGS

The accompanying drawings are included to provide a further understanding of the present invention and are incorporated in and constitute a part of this specification. The drawings illustrate exemplary embodiments of the present invention and, together with the description, serve to explain the principles of the present invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1 illustrates an exemplary side cross-sectional view of the motor associated with a semi-hermetic screw compressor, where the motor is equipped with a cooling system comprising fluid injection devices.
FIG. 2 illustrates an exemplary representation of a refrigerant line associated with the compressor of FIG. 1.
FIGs. 3A to 3D illustrate exemplary views of one or more embodiments of the ring-shaped fluid injection device used in the motor of FIG. 1.

### DETAILED DESCRIPTION

The following is a detailed description of embodiments of the present invention depicted in the accompanying drawings. The embodiments are in such detail as to clearly communicate the present invention. However, the amount of detail offered is not intended to limit the anticipated variations of embodiments; on the contrary, the intention is to cover all modifications, equivalents, and alternatives falling within the scope of the present invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, described herein may be oriented in any desired direction.

Screw compressors or semi-hermetic refrigerant screw compressors are widely used in refrigeration and air conditioning systems due to their efficiency and reliability. These compressors rely on a motor enclosed within the same housing as the compressor mechanism, making the unit compact and less susceptible to leaks. However, the operation of these compressors generates significant heat, which is to be managed to maintain efficiency and prevent damage. Specifically, the motor within the compressor may require cooling to prevent overheating, which may lead to failure.

Traditionally, cooling of the motor in screw compressors may be achieved by injecting a liquid refrigerant into the compressor housing. This liquid may typically be injected through ports located in the motor housing and the motor cover, allowing the refrigerant to come into direct contact with the motor, thereby absorbing heat and cooling the motor. However, due to space constraints within the compressor housing, the number of ports through which the refrigerant can be injected is limited, often to one port in the motor housing and one port in the motor cover. This limitation may result in uneven cooling of the motor, as the refrigerant may not be distributed evenly across all parts of the motor.

Areas of the motor that receive less cooling may be prone to local overheating, which can degrade the motor's performance over time and ultimately lead to motor failure. Furthermore, the traditional approach to motor cooling in screw compressors may not be optimized for efficiency. The injection of too much refrigerant through may cause additional viscous losses, further reducing the overall efficiency of the compressor. Thus, there is a need for an improved and space-efficient motor cooling system for screw compressors or semi-hermetic refrigerant screw compressors that addresses the issue of uneven motor cooling and overheating, while also improving the efficiency of the motor cooling process.

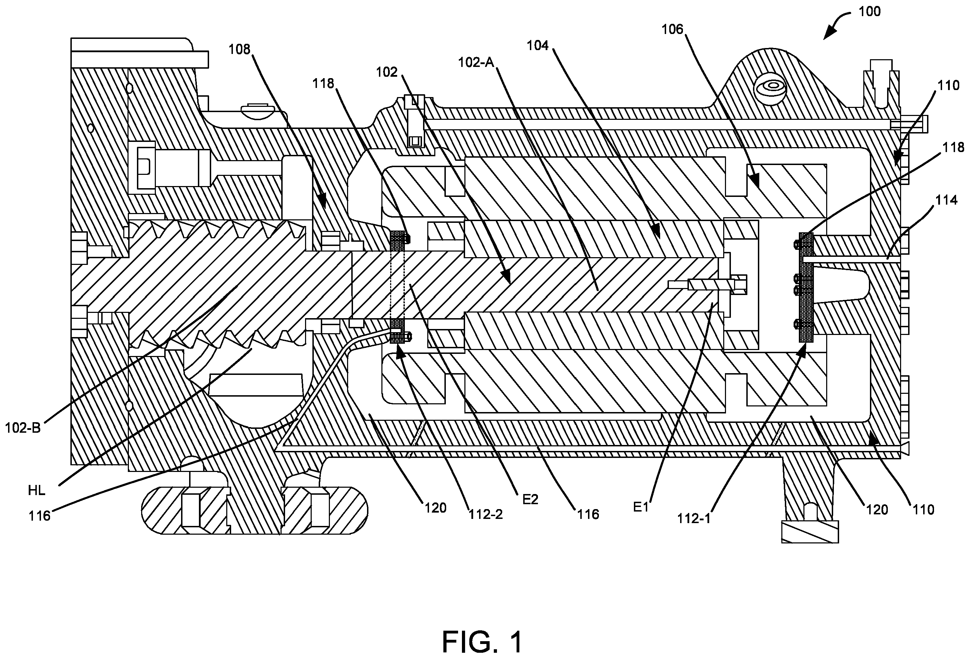

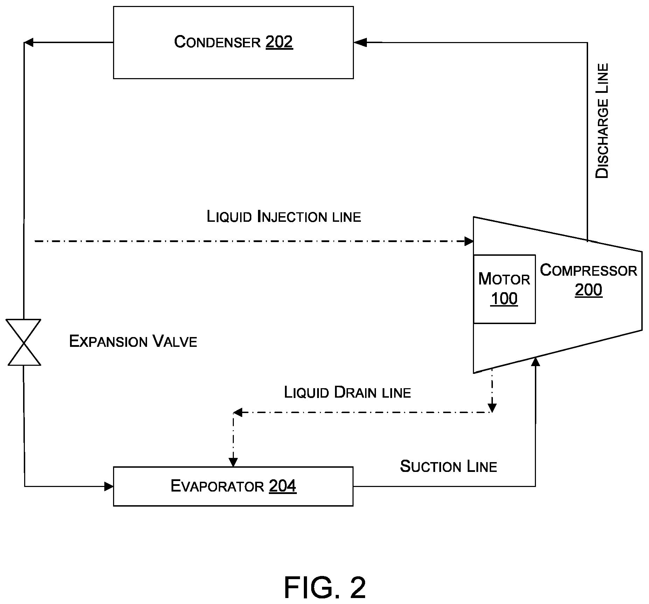

Referring to FIGs. 1 and 2, an electric motor 100 (also referred to as a motor 100, herein) associated with a screw compressor 200 (referred to as compressor, hereinafter) is disclosed. In one or more embodiments, the compressor 200 can be a semi-hermetic screw compressor or a bottom suction semi-hermetic screw compressor but not limited to the like. However, in other embodiments, the compressor 200 can also be any other type of screw compressor without any limitations. In one or more embodiments, the motor 100 can be integrated within an enclosure of the compressor 200. However, in other embodiments, the motor 100 can have a separate enclosure that can be fluidically connected to the enclosure of the compressor 200.

In one or more embodiments, in the semi-hermetic screw compressor 200, a shaft 102 associated with a male rotor can be rotatably configured within a housing 108 (enclosure) of the compressor 200, such that a first section 102-A of the shaft 102 extends out of the housing 108 and a second section 102-B of the shaft 102 remains enclosed within the housing 108. In one or more embodiments, the first section 102-A can be attached to an end of the second section 102-B, however, the second section 102-B and the first section 102-A can also be integral to form the shaft 102.

Further, the second section 102-B of the shaft 102 can include a helical lobe (HL) forming a screw type profile that can enmesh with another helical lobe (not shown) formed on a female rotor (not shown) associated with the semi-hermetic screw compressor 200. Furthermore, in the compressor 200, the female rotor and the second section 102-B of the male rotor can be enclosed within the same housing 108. In one or more embodiments, the shaft 102 can be driven for rotation about its axis by the motor 100. The driving of the male rotor can cause the engagement between lobes to, in turn, enable rotation of the female rotor about its axis. In one or more embodiments, the female rotor and the second section 102-B of the male rotor can be rotatably supported within the housing 108 using one or more bearings (not shown) to allow rotation of the male and female rotors about their corresponding axis.

The motor can further include rotor 104 comprising a plurality of rotor elements configured around the first section 102-A of the shaft 102, where the rotor elements can be configured to rotate along with the shaft 102. The motor 100 can further include a stator 106 comprising a stator stack having a plurality of stator windings arranged around the first section 102-A of the rotor 104, such that the stator windings and the first section 102-A of the rotor 104 remain enclosed within a cover 110. This cover 110 can be further attached to the housing 108 using one or more fasteners. However, in some embodiments, the cover 110 of the motor 100 and the housing 108 can also be integral.

The motor 100 can be configured to be electrically connected to a power supply that can provide electric current to the stator windings to induce an electromagnetic field within the stator windings, resulting in a rotational motion of the rotor 104 and shaft 102 about its axis. In the compressor 200, the two meshing rotors (male and female) comprising helical lobes interlocked within the housing 108 of the compressor 200, can create a series of decreasing volume chambers between them. As the rotors rotate, gas (refrigerant) can be drawn into the housing 108 through an intake end (not shown). The meshing motion of the rotors can then force the gas through the compressor 200, progressively reducing the volume of the chambers and thus compressing the gas. This continuous, valveless compression process can result in a steady flow of compressed gas being pushed towards a discharge end (not shown) of the compressor 200, where it exits at a higher pressure for use in refrigeration, air conditioning, or industrial applications.

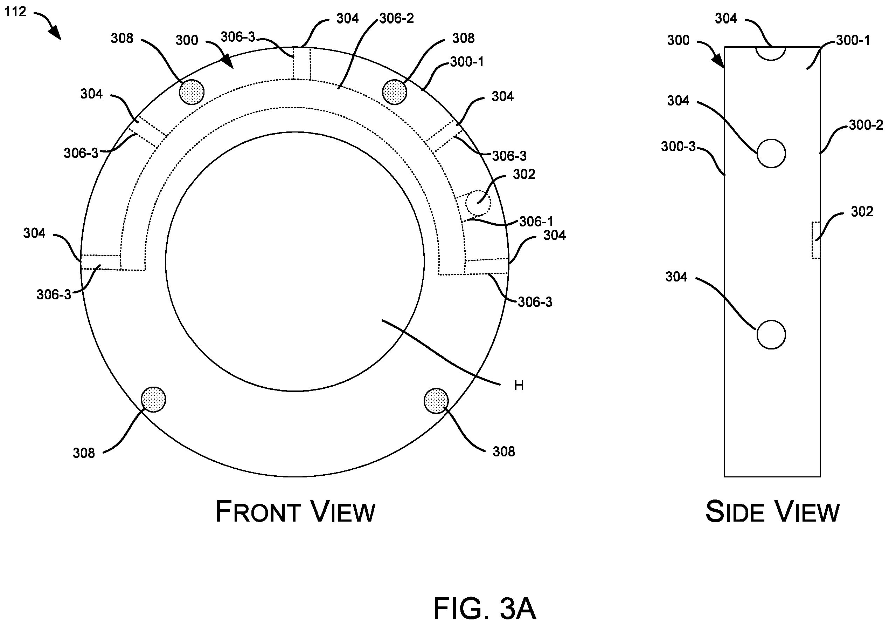

In one or more embodiments, the motor 100 can include at least one fluid injection device 112-1, 112-2 (collectively referred to as fluid injection device 112 or injection device 112, herein) configured at one or both ends E1, E2 of the first section 102-A of the shaft 102. Each of the injection device 112 can include an inlet port 302, and one or more outlet ports 304 configured at predefined positions on the corresponding injection device 112 as shown in detail in FIGs. 3A to 3D, where the outlet ports 304 can be fluidically connected to the inlet port 302 via a plurality of fluidic passages (web of passages) 306-1 to 306-3 extending within the body 300 of the corresponding injection device 112. Further, referring back to FIG. 1, the motor 100 can include one or more fluid injection passages 114, 116 extending through the cover 110 and/or the housing 108. These fluid injection passages 114, 116 may allow a refrigerant associated with the compressor 200 to flow within the cover 110. Further, in one or more embodiments, the fluid injection devices 112 can be configured coaxially to the shaft 102 at one or both ends E1, E2 of the first section 102-A of the shaft 102 such that the inlet 302 of each of the injection devices 112 remains fluidically connected to the fluid injection passage 114, 116 extending through the cover 110 and/or the housing 108. However, in other embodiments, the fluid injection devices 112 may not be coaxial to the shaft 102 but the inlet 302 of each of the injection devices 112 may remain fluidically connected to the fluid injection passage 114, 116 extending through the cover 110 and/or the housing 108.

In one or more embodiments, a first injection device 112-1 among the at least one injection device can be configured with the cover 110 at the first end E1 (away from the housing 108) of the first section 102-A of the shaft 102 such that the first injection device 112-1 remains fluidically connected to a first fluid injection passage 114 provided in the cover 110. Further, a second injection device 112-2 among the at least one injection device can be configured with the housing 108 or cover 110 at a second end (opposite to the first end) E2 of the first section 102-A of the shaft 102 such that the second injection device 112-2 remains fluidically connected to a second fluid injection passage 116 provided in the housing 108 or the cover 110, with the shaft 102 extending coaxially through a central hole H of the second injection device 112-2. However, in some embodiments, the center of the second injection device 112-2 may not be aligned with the central axis of the shaft 102. As illustrated, the second fluidic passage 116 can enter the housing 108 from the first end E1 (of the cover 110) and further gets connected to the inlet 302 of the second injection device 112-2 through the passage provided in the housing 108. However, the second fluidic passage 116 can also directly enter and extend through the housing 108 without traveling through the cover 110 of the motor 100.

The motor 100 or compressor 200 can be configured to enable the refrigerant associated with the compressor 200 to flow into the fluid injection devices 112 through the inlet port 302 via the fluid injection passage 114 provided in the cover 110 and/or the housing 108 of the motor 100. Further, the fluid injection devices 112 can enable the received (incoming) refrigerant to flow or spray towards the stator 106 and/or the rotor 104, at the one or both ends E1, E2 of the shaft 102 or the first section 102-A, through the outlet ports 304. Accordingly, the supplied/sprayed refrigerant may facilitate uniform cooling of the stator 106 and the rotor 104 from both ends E1, E2 within the motor 100 cover 110.

Referring back to FIG. 1, in one or more embodiments, the cover 110 of the motor 100 can include a drain area 120 configured at the bottom to receive and collect the refrigerant drained from the stator 106 and/or the rotor 104, along with any refrigerant leaked within the motor 100. Further, the motor 100 can be configured to enable the supply of the drained refrigerant into a liquid drain line associated with the compressor 200 or a refrigerant line in which the compressor 200 is employed. Referring to FIG. 2, the liquid drain line can be further connected to an evaporator 204 being fluidically connected to the compressor 200 in the refrigerant line. Further, the fluid injection device 112 or fluid injection passages provided in the housing 108 or cover 110 can be fluidically connected to a liquid injection line connected to a condenser 202 being fluidically connected to the compressor 200 in the refrigerant line. Accordingly, the motor 100 can receive cool liquid refrigerant from the condenser 202 via the liquid injection line, and further return the refrigerant collected within the motor's housing 108 or cover 110 back to the refrigerant line (via the drain line) along with the vapor phase of the refrigerant (formed within the evaporator 204).

In one or more embodiments, the first and second fluid injection devices 112 can be a ring-shaped member comprising the inlet port 302 and the outlet ports 304. Further, in some embodiments, the first fluid injection device 112-1 can also be a disc-shaped member comprising the inlet port 302 and the outlet ports 304. However, the second fluid injection device 112-2 has to be a ring-shaped member such that the shaft 102 can extend coaxially through a central hole H of the ring-shaped member to allow uninterrupted rotation of the shaft 102 about its axis, with the first and second fluid injection devices 112-1, 112-2 being coaxially positioned at each end E1, E2 of the first section 102-A of the shaft 102.

Referring to FIG. 3A, in one or more embodiments, the ring-shaped member 300 of the fluid injection device 112 can include the inlet port 302 on a planar side 300-2 of the ring-shaped member 300. Further, the outlet ports 304 can be configured radially at the predefined positions along an outer curved surface 300-1 of the corresponding member 300. In one or more embodiments, the fluidic passages within the ring-shaped member 300 may include a first path 306-1 extending at least partially within the member 300 in an axial direction from the inlet port 302. The fluidic passages may further include a second path 306-2 connected to the first path 306-1 and extending circumferentially between each of the outlet ports 304 within the ring-shaped member 300 along a plane (perpendicular to the axial direction) of the ring-shaped member. Further, the fluidic passage may include one or more third paths 306-3, each extending from the second path 306-2 in a radial direction towards one of the outlet ports 304 such that all the outlet ports 304 remain fluidically connected to the inlet port 302 via the fluidic passages.

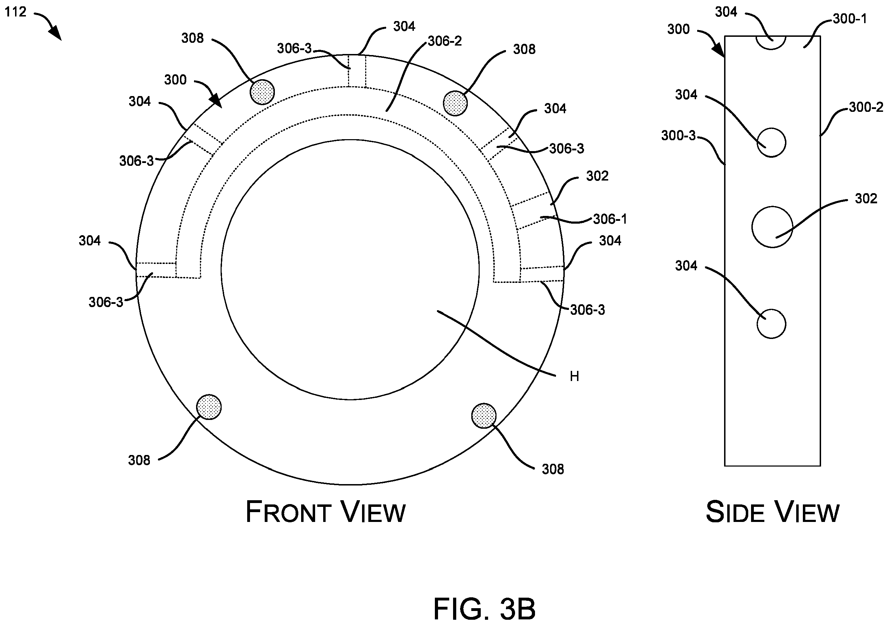

Referring to FIG. 3B, in one or more embodiments, the ring-shaped member of the fluid injection device 112 can include the inlet port 302 on the outer curved surface 300-1 of the ring-shaped member 300. Further, the outlet ports 304 can be also configured radially at the predefined positions along the outer curved surface 300-1 of the corresponding member 300. In one or more embodiments, the fluidic passages within the ring-shaped member 300 may include a first path 306-1 extending at least partially within the ring-shaped member 300 in a radial direction from the inlet port 302. The fluidic passages may further include a second path 306-2 connected to the first path 306-1 and extending circumferentially between each of the outlet ports 304 within the ring-shaped member 300 along the plane (along the radial direction) of the ring-shaped member 300. Further, the fluidic passage may include one or more third paths 306-3, each extending from the second path 306-2 in the radial direction towards one of the outlet ports 304 or the outer curved surface 300-1 such that all the outlet ports 304 remain fluidically connected to the inlet port 302 via the fluidic passages.

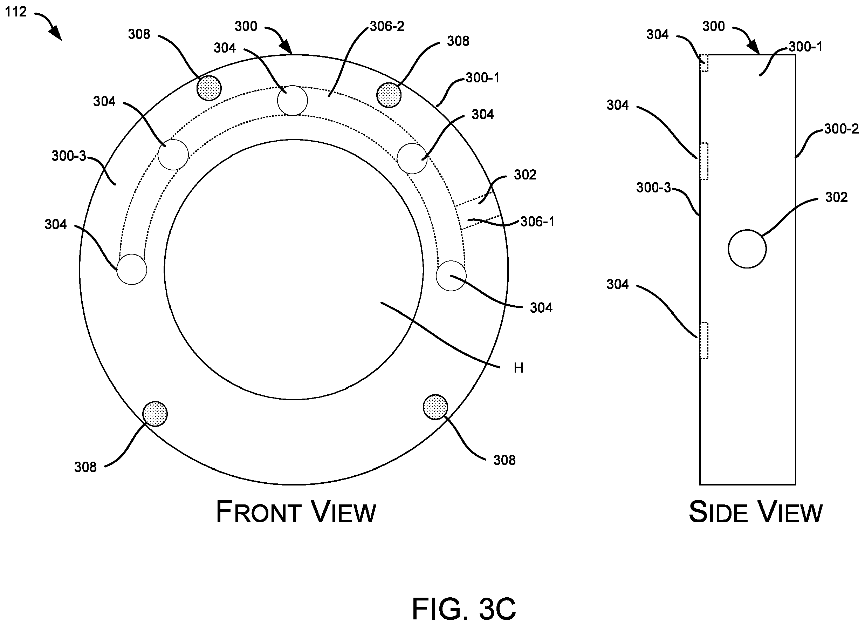

Referring to FIG. 3C, in one or more embodiments, the ring-shaped member 300 of the fluid injection device 112 can include the inlet port 302 on the outer curved surface 300-1 of the ring-shaped member 300. Further, the outlet ports 304 can be also configured at the predefined positions on a planar side 300-2 of the corresponding member 300. In one or more embodiments, the fluidic passages within the ring-shaped member 300 may include a first path 306-1 extending at least partially within the member 300 in a radial direction from the inlet port 302. The fluidic passages may further include a second path 306-2 connected to the first path 306-1 and extending circumferentially between each of the outlet ports 304 within the ring-shaped member 300 along a plane (along the radial direction) of the ring-shaped member 300. Further, the fluidic passage may include one or more third paths 306-3, each extending from the second path 306-2 in an axial direction towards one of the outlet ports 304 or the planar side 300-2 such that all the outlet ports 304 remain fluidically connected to the inlet port 302 via the fluidic passages.

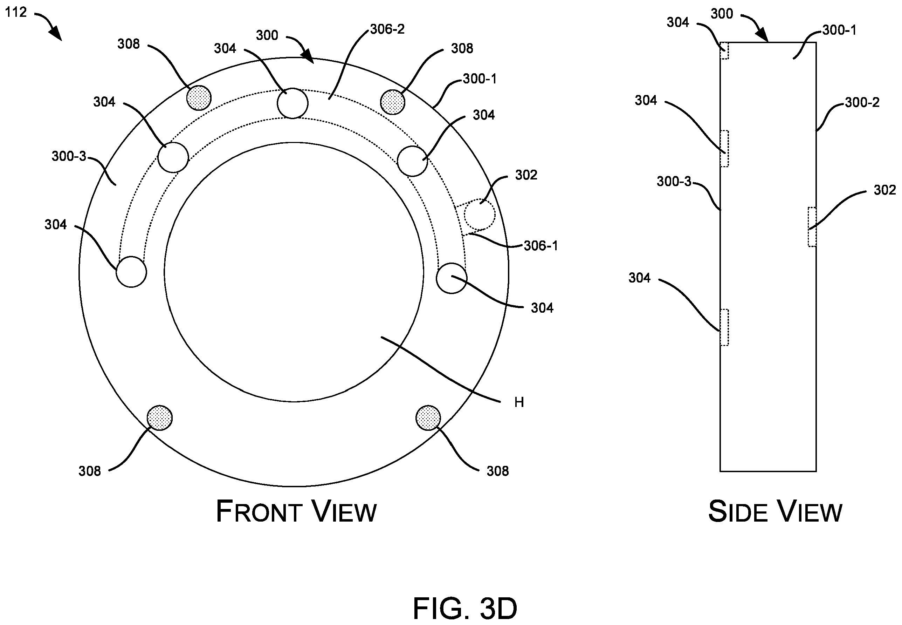

Referring to FIG. 3D, in one or more embodiments, the ring-shaped member 300 of the fluid injection device 112 can include the inlet port 302 on a planar side 300-2 of the ring-shaped member 300. Further, the outlet ports 304 can be configured at the predefined positions on another planar side 300-3 of the corresponding member 300 such that the inlet port 302 remains on the opposite side of the outlet ports 304. In one or more embodiments, the fluidic passages within the ring-shaped member 300 may include a first path 306-1 extending at least partially within the member 300 in an axial direction from the inlet port 302. The fluidic passages may further include a second path 306-2 connected to the first path 306-1 and extending circumferentially between each of the outlet ports 304 within the ring-shaped member 300 along a plane (along the radial direction) of the ring-shaped member 300. Further, the fluidic passage may include one or more third path 306-3s, each extending from the second path 306-2 in the same axial direction towards one of the outlet ports 304 such that all the outlet ports 304 remain fluidically connected to the inlet port 302 via the fluidic passages.

In one or more embodiments, the size of the outlet ports 304 can be smaller than the size of the inlet port 302 in the fluid injection devices 112 to regulate the outflow of the refrigerant through the outlet ports 304. However, in other embodiments, the size of the outlet ports 304 can also be equal to or greater than the size of the inlet port 302 in the fluid injection devices 112. Further, in one or more embodiments, the size of the outlet ports 304 can also be different.

In one or more embodiments, the outlet ports 304 can be configured at the predefined positions on the fluid injection devices 112 such that upon coaxially configuring the corresponding injection device 112 with respect to the shaft 102, the outlet ports 304 remain above a plane passing through a center of the shaft 102. Accordingly, the outlet ports 304 above the central plane can supply/spray the refrigerant to an upper portion of the stator 106 and the rotor 104. Further, the supplied/sprayed refrigerant can automatically drain from the upper portion towards the bottom portion of the stator 106 and the rotor 104 under the effect of gravity. This arrangement of the outlet ports 304 may help keep the total number of outlet ports 304 lower, while effectively and uniformly supplying the refrigerant to the entire portion of the stator 106 and the rotor 104.

In addition, in one or more embodiments, each of the fluid injection devices 112 can include one or more mounting holes 308 extending axially therethrough. The mounting holes 308 can be configured to facilitate attachment of the corresponding fluid injection devices 112, at the corresponding fluid injection passage 114, 116, to the cover and/or the housing 108 using one or more fasteners 118 as shown in FIG. 1, such that the inlet 302 of the attached injection device 112 gets fluidically connected to the corresponding fluid injection passage 114, 116.

Various embodiments and drawings have been described herein for a semi-hermetic screw compressor, however, the teachings of the present invention are equally applicable for motors associated with other compressors or other screw compressors as well, and all such embodiments are well within the scope of the present invention as defined by the appended claims. In such embodiments (not shown), the compressor can include the motor enclosed within the same cover or housing. The motor can include the rotor having the shaft and the stator arranged around the rotor within the cover. Further, the fluid injection devices can be configured coaxially to the shaft at one or both ends of the shaft within the cover, such that each of the injection devices remains fluidically connected to one of the fluid injection passages extending through the cover.

Further, the teachings of the present invention are equally applicable to motors associated with other types of compressors as well as for motors associated with non-compressor-based applications, without any limitations, and all such embodiments are well within the scope of this invention.

It is to be appreciated by a person skilled in the art that the fluid injection devices facilitate enhancing the refrigerant injection mechanism into the motor, allowing for a more uniform distribution of the refrigerant without the need for increasing the number of ports within the compressor housing and motor cover. This solution not only facilitates a precise optimization of the injection's direction, location, and flow rate to maximize the cooling effect but also significantly boosts compressor efficiency. By calibrating the amount of liquid utilized for cooling, it ensures minimal waste and reduces viscous loss. Consequently, this optimized cooling process not only conserves resources but also contributes to the overall improvement in the performance and longevity of the motor.

Thus, this invention overcomes the challenges associated with existing motor cooling systems associated with compressors as well as in general, by providing an improved and space-efficient motor cooling system for screw compressors or semi-hermetic refrigerant screw compressors that addresses the issue of uneven motor cooling and overheating, while also improving the efficiency of the motor cooling process.

While the invention has been described with reference to exemplary embodiments, it will be understood by those skilled in the art that various changes may be made without departing from the scope of the invention as defined by the appended claims. Modifications may be made to adopt a particular situation or material to the teachings of the present invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A motor (100) for a compressor (200), the motor comprising:
a rotor (104) configured over a shaft (102);
a stator (106) arranged around the rotor within a cover (110) associated with the motor; and
at least one fluid injection device (112, 112-1, 112-2),
wherein the at least one injection device has a predefined shape and comprises an inlet port (302), and one or more outlet ports (304) configured at predefined positions on the corresponding injection device, the one or more outlet ports being fluidically connected to the inlet port via a plurality of fluidic passages (306-1, 306-2, 306-3) extending within the corresponding injection device,
wherein the inlet of each of the at least one injection device is fluidically connected to a fluid injection passage (114, 116) extending through the cover,
wherein a first injection device (112-1) among the at least one injection device is a ring-shaped member (300) comprising the inlet port and the one or more outlet ports, wherein the first injection device is configured with the cover at a first end (E1) of the shaft such that the first injection device remains fluidically connected to a first fluid injection passage (114) provided in the cover, the motor being **characterized in that** the inlet port is configured axially on a planar side (300-2) of the ring-shaped member, and the one or more outlet ports is configured radially at the predefined positions along an outer curved surface (300-1) of the corresponding ring-shaped member.

2. The motor of claim 1, wherein the compressor is a screw compressor, wherein the at least one fluid injection device is configured at one or both ends (E1, E2) of the shaft.

3. The motor of claim 1 or 2, wherein the compressor is a semi-hermetic screw compressor associated with a vapor compression system, wherein the shaft is rotatably configured within a housing (108) associated with the compressor, such that a first section (102-A) of the shaft extends out of the housing and remains enclosed by the cover and a second section (102-B) of the shaft remains enclosed within the housing, wherein the cover is attached to the housing and the inlet of each of the at least one injection device is fluidically connected to the fluid injection passage extending through the cover and/or the housing of the motor.

4. The motor of claim 3, wherein the motor is configured to enable a refrigerant associated with the compressor to flow into the at least one injection device through the inlet port via fluid injection passage provided in the cover and/or the housing of the motor, wherein the at least one injection device further enables the refrigerant to flow or spray towards the stator and/or the rotor, at the one or both ends of the shaft or the first section, through the outlet ports via the corresponding fluidic passages.

5. The motor of claim 3 or 4, wherein a second injection device (112-2) among the at least one injection device is a ring-shaped member (300) comprising the inlet port and the one or more outlet ports, wherein the second injection device is configured with the housing at a second end (E2) of the first section of the shaft or a second end (E2) of the shaft such that the second injection device remains fluidically connected to a second fluid injection passage (116) provided in the housing with the shaft extends coaxially through the second injection device.

6. The motor of any preceding claim, wherein the at least one fluid injection devices comprises one or more mounting holes (308) that are configured to facilitate attachment of the corresponding fluid injection devices, at the corresponding fluid injection passage, to the cover and/or the housing using one or more fasteners, such that the inlet of the attached injection device gets fluidically connected to the corresponding fluid injection passage.

7. The motor of any one preceding claim, wherein the size of the one or more outlet ports is less than the size of the inlet port.

8. The motor of any preceding claim, wherein the one or more outlet ports are configured at the predefined positions on the at least one injection device such that, upon coaxially configuring the corresponding injection device with respect to the shaft, the one or more outlet ports remains above a plane passing through a center of the shaft when the compressor is in use.

## Patentansprüche

1. Motor (100) für einen Kompressor (200), wobei der Motor umfasst:
einen Rotor (104), der über einer Welle (102) ausgelegt ist;
einen Stator (106), der um den Rotor innerhalb einer Abdeckung (110), die dem Motor zugeordnet ist, angeordnet ist; und mindestens eine Fluideinspritzvorrichtung (112, 112-1, 112-2),
wobei die mindestens eine Einspritzvorrichtung eine vordefinierte Form aufweist und eine Einlassöffnung (302) sowie eine oder mehrere Auslassöffnungen (304) umfasst, die an vordefinierten Positionen auf der entsprechenden Einspritzvorrichtung ausgelegt sind, wobei die eine oder
mehreren Auslassöffnungen über eine Vielzahl von Fluidkanälen (306-1, 306-2, 306-3), die sich innerhalb der entsprechenden Einspritzvorrichtung erstrecken, mit der Einlassöffnung fluidverbunden sind,
wobei der Einlass jeder der mindestens einen Einspritzvorrichtung mit einem Fluideinspritzkanal (114, 116), der sich durch die Abdeckung erstreckt, fluidverbunden ist,
wobei eine erste Einspritzvorrichtung (112-1) unter der mindestens einen Einspritzvorrichtung ein ringförmiges Element (300) ist, das die Einlassöffnung und die eine oder mehreren Auslassöffnungen umfasst, wobei die erste Einspritzvorrichtung an einem ersten Ende (E1) der Welle mit der Abdeckung derart ausgelegt ist, dass die erste Einspritzvorrichtung mit einem ersten Fluideinspritzkanal (114), der in der Abdeckung vorgesehen ist, fluidverbunden ist, wobei der Motor **dadurch gekennzeichnet ist, dass** die Einlassöffnung axial auf einer ebenen Seite (300-2) des ringförmigen Elements ausgelegt ist und
die eine oder mehreren Auslassöffnungen radial an den vordefinierten Positionen entlang einer äußeren gekrümmten Fläche (300-1) des entsprechenden ringförmigen Elements ausgelegt sind.

2. Motor nach Anspruch 1, wobei der Kompressor ein Schraubenkompressor ist, wobei die mindestens eine Fluideinspritzvorrichtung an einem oder beiden Enden (E1, E2) der Welle ausgelegt ist.

3. Motor nach Anspruch 1 oder 2, wobei der Kompressor ein halbhermetischer Schraubenkompressor ist, der mit einem Dampfkompressionssystem verbunden ist, wobei die Welle innerhalb eines Gehäuses (108), das mit dem Kompressor verbunden ist, drehbar angeordnet ist, sodass sich ein erster Abschnitt (102-A) der Welle aus dem Gehäuse heraus erstreckt und von der Abdeckung umschlossen bleibt und ein zweiter Abschnitt (102-B) der Welle innerhalb des Gehäuses umschlossen bleibt, wobei die Abdeckung an dem Gehäuse angebracht ist und der Einlass jeder der mindestens einen Einspritzvorrichtung mit dem Fluideinspritzkanal, der sich durch die Abdeckung und/oder das Gehäuse des Motors erstreckt, fluidverbunden ist.

4. Motor nach Anspruch 3, wobei der Motor ausgelegt ist, um ein Kühlmittel, das mit dem Kompressor verbunden ist, über einen Fluideinspritzkanal, der in der Abdeckung und/oder dem Gehäuse des Motors vorgesehen ist, durch die Einlassöffnung in die mindestens eine Einspritzvorrichtung strömen zu lassen, wobei die mindestens eine Einspritzvorrichtung das Kühlmittel ferner in Richtung des Stators und/oder des Rotors an dem einen oder den beiden Enden der Welle oder des ersten Abschnitts durch die Auslassöffnungen über die entsprechenden Fluidkanäle strömen oder sprühen lässt.

5. Motor nach Anspruch 3 oder 4, wobei eine zweite Einspritzvorrichtung (112-2) unter der mindestens einen Einspritzvorrichtung ein ringförmiges Element (300) ist, das die Einlassöffnung und die eine oder mehreren Auslassöffnungen umfasst, wobei die zweite Einspritzvorrichtung an einem zweiten Ende (E2) des ersten Abschnitts der Welle oder einem zweiten Ende (E2) der Welle derart mit dem Gehäuse ausgelegt ist, dass die zweite Einspritzvorrichtung mit einem zweiten Fluideinspritzkanal (116), der in dem Gehäuse vorgesehen ist, in fluidverbunden bleibt, wobei sich die Welle koaxial durch die zweite Einspritzvorrichtung erstreckt.

6. Motor nach einem der vorhergehenden Ansprüche, wobei die mindestens eine Fluideinspritzvorrichtung ein oder mehrere Montagelöcher (308) umfasst, die derart ausgelegt sind, dass sie eine Anbringung der entsprechenden Fluideinspritzvorrichtungen an dem entsprechenden Fluideinspritzkanal an der Abdeckung und/oder dem Gehäuse unter Verwendung einer oder mehrerer Befestigungseinrichtungen ermöglichen, sodass der Einlass der angebrachten Einspritzvorrichtung mit dem entsprechenden Fluideinspritzkanal fluidverbunden wird.

7. Motor nach einem der vorhergehenden Ansprüche, wobei die Größe der einen oder mehreren Auslassöffnungen kleiner ist als die Größe der Einlassöffnung.

8. Motor nach einem der vorhergehenden Ansprüche, wobei die eine oder mehreren Auslassöffnungen an den vordefinierten Positionen auf der mindestens einen Einspritzvorrichtung so ausgelegt sind, dass bei koaxialer Auslegung der entsprechenden Einspritzvorrichtung in Bezug auf die Welle die eine oder mehreren Auslassöffnungen bei Betrieb des Kompressors oberhalb einer Ebene verbleiben, die durch eine Mitte der Welle verläuft.

## Revendications

1. Moteur (100) destiné à un compresseur (200), le moteur comprenant :
un rotor (104) configuré sur un arbre (102) ;
un stator (106) disposé autour du rotor à l'intérieur d'un couvercle (110) associé au moteur ; et
au moins un dispositif d'injection (112, 112-1, 112-2) de fluide,
dans lequel l'au moins un dispositif d'injection présente une forme prédéfinie et comprend un orifice d'entrée (302), et un ou plusieurs orifices de sortie (304) configurés au niveau de positions prédéfinies sur le dispositif d'injection correspondant, le ou les orifices de sortie étant raccordés fluidiquement à l'orifice d'entrée par l'intermédiaire d'une pluralité de passages fluidiques (306-1, 306-2, 306-3) s'étendant à l'intérieur du dispositif d'injection correspondant,
dans lequel l'entrée de chacun de l'au moins un dispositif d'injection est raccordée fluidiquement à un passage d'injection de fluide (114, 116) s'étendant à travers le couvercle,
dans lequel un premier dispositif d'injection (112-1) parmi l'au moins un dispositif d'injection est un élément en forme d'anneau (300) qui comprend l'orifice d'entrée et le ou les orifices de sortie, dans lequel le premier dispositif d'injection est configuré avec le couvercle au niveau d'une première extrémité (E1) de l'arbre de telle sorte que le premier dispositif d'injection reste raccordé fluidiquement à un premier passage d'injection de fluide (114) prévu dans le couvercle, le moteur étant **caractérisé en ce que** l'orifice d'entrée est configuré axialement sur un côté plan (300-2) de l'élément en forme d'anneau, et le ou les orifices de sortie sont configurés radialement au niveau des positions prédéfinies le long d'une surface courbe externe (300-1) de l'élément en forme d'anneau correspondant.

2. Moteur selon la revendication 1, dans lequel le compresseur est un compresseur à vis, dans lequel l'au moins un dispositif d'injection de fluide est configuré au niveau d'une ou de deux extrémités (E1, E2) de l'arbre.

3. Moteur selon la revendication 1 ou 2, dans lequel le compresseur est un compresseur à vis semi-hermétique associé à un système de compression de vapeur, dans lequel l'arbre est configuré de manière rotative à l'intérieur d'un capot (108) associé au compresseur, de sorte qu'une première section (102-A) de l'arbre s'étende hors du capot et reste enfermée par le couvercle et qu'une seconde section (102-B) de l'arbre reste enfermée à l'intérieur du capot, dans lequel le couvercle est fixé au capot et l'entrée de chacun de l'au moins un dispositif d'injection est raccordée fluidiquement au passage d'injection de fluide qui s'étend à travers le couvercle et/ou le capot du moteur.

4. Moteur selon la revendication 3, dans lequel le moteur est configuré pour permettre à un fluide frigorigène associé au compresseur de s'écouler dans l'au moins un dispositif d'injection par l'orifice d'entrée par l'intermédiaire d'un passage d'injection de fluide prévu dans le couvercle et/ou le capot du moteur, dans lequel l'au moins un dispositif d'injection permet en outre au fluide frigorigène de s'écouler ou de pulvériser vers le stator et/ou le rotor, au niveau de l'une ou des deux extrémités de l'arbre ou de la première section, par les orifices de sortie par l'intermédiaire des passages fluidiques correspondants.

5. Moteur selon la revendication 3 ou 4, dans lequel un second dispositif d'injection (112-2) parmi l'au moins un dispositif d'injection est un élément en forme d'anneau (300) qui comprend l'orifice d'entrée et le ou les orifices de sortie, dans lequel le second dispositif d'injection est configuré avec le capot au niveau d'une seconde extrémité (E2) de la première section de l'arbre ou d'une seconde extrémité (E2) de l'arbre de telle sorte que le second dispositif d'injection reste raccordé fluidiquement à un second passage d'injection de fluide (116) prévu dans le capot, l'arbre s'étendant coaxialement à travers le second dispositif d'injection.

6. Moteur selon l'une quelconque revendication précédente, dans lequel l'au moins un dispositif d'injection de fluide comprend un ou plusieurs trous de montage (308) qui sont configurés pour faciliter la fixation des dispositifs d'injection de fluide correspondants, au niveau du passage d'injection de fluide correspondant, au couvercle et/ou au capot à l'aide d'un ou plusieurs éléments de fixation, de sorte que l'entrée du dispositif d'injection fixé soit raccordée fluidiquement au passage d'injection de fluide correspondant.

7. Moteur selon l'une quelconque revendication précédente, dans lequel la taille du ou des orifices de sortie est inférieure à la taille de l'orifice d'entrée.

8. Moteur selon l'une quelconque revendication précédente, dans lequel le ou les orifices de sortie sont configurés au niveau des positions prédéfinies sur l'au moins un dispositif d'injection de sorte que, lors de la configuration coaxiale du dispositif d'injection correspondant par rapport à l'arbre, le ou les orifices de sortie restent au-dessus d'un plan qui passe par un centre de l'arbre lorsque le compresseur est en cours d'utilisation.
